# EUROPEAN PATENT SPECIFICATION

(11) **EP 3 501 874 B1**
(45) Date of publication and mention of the grant of the patent: **07.07.2021**
(21) Application number: 18214828.8
(22) Date of filing: 20.12.2018
(51) Int. Cl.: B60K 37/06, B60K 35/00

(54) **GESTURE CONTROL METHOD AND DEVICE FOR AT LEAST ONE FUNCTION OF A VEHICLE**
GESTENSTEUERUNGSVERFAHREN UND -VORRICHTUNG FÜR MINDESTENS EINE FUNKTION EINES FAHRZEUGS
PROCÉDÉ ET DISPOSITIF DE COMMANDE GESTUELLE POUR AU MOINS UNE FONCTION D'UN VÉHICULE

(30) Priority: 20.12.2017 ES 201731436
(43) Date of publication of application: 26.06.2019
(73) Proprietor: Seat, S.A., 08760 Martorell (ES)
(72) Inventor: REGUEIRO ESTEVEZ, Borja, 08760 Martorel,l Barcelona (ES); GABARRO MORENTE, Xavier, 08760 Martorell, Barcelona (ES); MOLINA MARTINEZ, Daniel, 08760 Martorell, Barcelona (ES); GARCIA PAMPLONA, Antonio, 08760 Martorell, Barcelona (ES)
(74) Representative: Elzaburu S.L.P.

(56) References cited:
- DE-A1-102015 006 614
- US-A1- 2014 298 212
- US-A1- 2015 081 133

## Description

### OBJECT OF THE INVENTION

This patent application concerns a control method by gestures of the at least one function of a vehicle according to Claim 1, which incorporates significant innovations and advantages, and a device associated with the method according to Claim 9, which also incorporates significant innovations and advantages.

### BACKGROUND OF THE INVENTION

In certain high-end vehicles, in order to control some functions relating to the rear seats, such as rear seat ventilation, the at least one specific screen is implemented in the rear console area, as well as specific actuators to modify ventilation and temperature.
There are also cases in which external tablets are installed or used in vehicles, which enable these functions linked to the rear seats of the vehicle to be controlled through wireless connections.

In this respect, a method and control system to recognise gestures via a terminal installed in a vehicle is known in the state of the art, as detailed in document CN105151048. The method involves controlling the vehicle-installed terminal by detecting gestures through changes in the electric field. The detected gesture information is analysed and processed in order to obtain a corresponding action. An instruction is sent to achieve control over the terminal, according to a present instruction. The detection panel can be placed on a seat. In this way, people sitting in the front or rear row of a car can control various applications in the car, such as the radio, air conditioning, and similar.

In the state of the art, according to US20160084951, a system for recognising motion by analysing a radio signal is also known, which includes: a radio signal transmitter; a radio signal receiver; and a motion recognition processing device configured to: i) analyse the received radio signal, ii) extract and classify a gesture from the analysed radio signal, iii) recognise the extracted and classified gesture, and iv) perform control over the vehicle device based on the gesture recognition.

Thus, and in view of the above, it is clear that there is still a need to allow gesture control of certain vehicle functions by occupants of the rear seats of the passenger compartment of a vehicle, optimising the resources required.

Document US2014298212 discloses a control and display system wherein the system can be controlled either by a user's gestures, a remote control or voice control. The image from a rear facing camera can be displayed either on a vehicle's windshield by using a head up display. Alternatively, an image from a camera can be displayed on a head unit, which is located under the vehicle console between a driver seat and a front passenger seat.

Document DE102015006614 discloses a method for operating an operating device of a motor vehicle, in which a control gesture of a user and at least one spatial position at which the control gesture is carried out by means of a detection device of the control device is detected and then a function (F) of the motor vehicle is controlled as a function of the operating gesture, if it has been detected that the at least one spatial position lies within a predetermined interaction space, with the interaction space being determined a predetermined determination gesture carried out by the user is detected, at least one position (P1, P2) at which the determination gesture is carried out is detected and the at least one detected position (P1, P2) of the determination gesture as a coordinate of the interaction space is determined. The invention also relates to an operating device for a motor vehicle for controlling a function (F) of the motor vehicle.

Document US2015081133 discloses a system for a vehicle is configured to enable young children to control certain vehicle functions such as audiovisual, entertainment or temperature control functions. The system can detect the presence of a child in a rear vehicle seat, determine whether the child a specific child known to the system and then accordingly grant vehicle function control permissions. The system can detect, interpret, and execute gesture commands issued by a child. The useable gesture commands can be sufficiently simple that they are understandable to and reproducible by children even as young as toddlers. In general, the operation of the system can decrease driver distraction by freeing a driver of the need to operate vehicle functions on behalf of children.

### DESCRIPTION OF THE INVENTION

The present invention consists of a method, and its associated device, for the control by gestures of at least one function of a vehicle, in particular of functions linked to rear seats of the vehicle, of variables such as air conditioning, music, and ambient light.

Currently implementing actuators and displays in addition to those installed on the dashboard result in a substantial increase in costs and complexity. In particular, the installation of screens and actuators in the rear of the front seats or in the central area of the rear seats, is used only in high-end vehicles. On the other hand, the use of portable external devices, such as tablets and smart phones, requires occupying a wireless connection channel with the vehicle, in addition to requiring the prior installation of software enabled for the control of vehicle functions. In the case of portable external devices, it supposes a risk element inside the vehicle, since, in the event of an impact, it could become an object that causes damage to the occupants of the vehicle.

This invention is based on gesture control to allow, from the rear or rear seats, the control of certain functions of the vehicle. Rear or rear seats means the rows of seats behind the first line of the driver and passenger.

As for the "Hardware", or physical elements necessary for a basic embodiment of the present invention, this must consist of an HMI (Human Machine Interface) that has a special representation mode for the variables that, in particular, affect the rear seats of the passenger compartment.
Generically speaking, in the context of this invention, a series of predefined gestures are determined as signals that induce changes in the variables or parameters of the vehicle. For example, and in a non-limiting way, raising a hand increases the intensity, lowering a hand reduces the intensity, and moving a hand to the left changes the context or function to be modified.

In summary, and as the most relevant characteristics of the method of invention, the following actions or steps can be cited, in a non-limiting way:
- performing a predetermined gesture to activate the HMI operation from the rear seats;
- authorisation by the occupant driver;
- representation through the HMI of a simplified context or set of information with only functions of interest for the rear seats;
- gesture control and navigation in the simplified HMI;
- communication between the gesture detector and the HMI.
Thus, and more specifically, the method of controlling through gestures at least one function of a vehicle, includes the steps of:
- recognition of at least one first gesture by an occupant of at least one rear seat of the vehicle,
- enabling control of the at least one vehicle function based on the at least one recognised first gesture,
- recognition of at least one second gesture by an occupant of at least one rear seat of the vehicle,
- and controlling the at least one function of the vehicle on the basis of the at least one recognised second gesture.

In this way, the driver can avoid handling the controls that mainly affect the rear seats, resulting in greater driving safety.

In this way, the rear seat occupant can be offered more functionalities that affect the rear seat occupants, for example in terms of the level of lighting, or the radio volume, increasing comfort by increasing their decision-making autonomy. As an advantage, the need to enable a control of the at least one function of the vehicle is highlighted, in such a way that an occupant of one of the vehicle's front seats can authorise the control by gestures of the at least one function of the vehicle, resulting in an increase in safety in the vehicle, and control by the driver of the vehicle's parameters.

In addition, the at least one first gesture is different than the at least one second gesture. The first gesture is a predefined gesture, which allows the method of the present invention to awaken or be initiated. On the contrary, the at least a second gesture refers to gestures that are previously memorised and known by the control unit to control the at least one function of the vehicle.

The method comprises an additional step of representing the at least one function of the vehicle by means of a graphical representation device, in particular an HMI. This action of representing is based on the previous step of controlling the at least one function. In this way the occupant, both the driver and the occupant of the at least one rear seat, has the possibility to visually observe the modifications made by the occupant in this function.

According to the invention, the at least one graphical representation device is a first interface, where the at least one first interface is arranged on an instrument panel or vehicle console, in such a way that both the driver and the occupant of the at least one rear seat observe the function of the vehicle to be controlled in the first interface. The present invention's optimisation of resources is emphasised, since the first interface is the graphical representation device arranged in the vehicle's dashboard. In this way, the first interface can be controlled tactilely by the occupants of the front seats and can be controlled by gestures by the occupants of the rear seats.

According to the invention, the step of representing the at least one function of the vehicle at the first interface comprises representing the at least one function in a simplified way, so that the at least one function is visible from the at least one rear seat of the vehicle. Thus, the at least one function is easily understandable in its meaning, even despite the distance between the rear seats and the vehicle's dashboard or console. As an example, the at least one simplified function is represented with a larger font size, with a larger contrast, eliminating irrelevant information...

More specifically, the step of controlling the at least one vehicle function involves modifying at least one vehicle parameter, where the at least one vehicle parameter is linked to the at least one rear seat of the vehicle. In this way, the occupant of the rear seats has a greater autonomy when it comes to managing the variables or parameters of the vehicle that affect them.

According to another aspect of the invention, the method of the present invention comprises an additional step of determining the occupant of the at least one rear seat of the vehicle performing the at least one second gesture, where the step of modifying the at least one parameter of the vehicle comprises modifying the at least one parameter of the vehicle linked to the occupant of the at least one rear seat of the given vehicle. In this way the variation of variables or parameters in the environment of the passenger compartment is limited to a greater extent to each of the occupants in particular, minimising the influence of changes on other occupants. Thus, the method of invention makes it possible to differentiate between a occupant of a left rear seat and a right rear seat in order to change the parameter exclusively to that occupant. In more detail and as an example, determining the occupant of the at least one rear seat of the vehicle involves analysing the at least a second gesture and determining the position of the thumb of the occupant of the rear seat. Depending on the position of the thumb, a distinction is made between the occupant of the left rear seat and the occupant of the right rear seat.

More particularly, the step of controlling the at least one vehicle function involves navigating between the at least one vehicle function and/or selecting the at least one vehicle function and/or increasing an intensity of the at least one vehicle function and/or reducing an intensity of the at least one vehicle function.

These operations are of interest to a occupant in order to increase their sense of comfort in the cabin. These control actions are carried out, as mentioned above, by means of the at least a second gesture, where advantageously said the at least a second gesture is previously known by the control unit.

According to another aspect of the invention, the method involves an additional step of determining an authorisation to enable the control of the at least one function of the vehicle. Thus, if an authorisation is determined, the control of the at least one function of the vehicle by the occupant of at least one rear seat is enabled. On the other hand, if an authorisation is not determined, the control of the at least one function of the vehicle by the occupant of the at least one rear seat is not enabled.

More specifically, the authorisation to enable the control of the at least one function is carried out by an occupant of the at least one front seat of the vehicle, preferably the driver of the vehicle. Thus, occupants of the rear seats cannot control any cabin variable without the consent of an occupant of the front seats. Preferably, the vehicle driver should give the authorisation to enable the control. In addition, authorisation to enable control is given via the first interface. Alternatively, authorisation to enable control is given by voice control, an actuator on the vehicle steering wheel, and/or a third predefined gesture.

Additionally, the method of the invention comprises an additional step of disabling the control of the at least one function of the vehicle. In particular, disabling may be for a period of inactivity and/or by means of an actuation on the first interface and/or an actuation on the second interface and/or by a vehicle control unit, where priority information must be displayed through the first interface. In this way, operation can be deactivated to avoid confusion or contradictory instructions. Consequently, the step of disabling the control of the at least one function of the vehicle can be performed by the occupant of a front seat, by the occupant of a rear seat and/or by the control unit.

More particularly, the step of recognising the at least one first gesture and/or the step of recognising the at least one second gesture additionally comprises the steps of:
- transmitting a wireless signal, receiving the transmitted wireless signal,
- analysing a variation between the transmitted wireless signal and the received wireless signal,
- identifying the at least a first gesture and/or the at least a second gesture based on the variation between the transmitted wireless signal, the received wireless signal and previously stored information.

In this way the system that executes the method of the present invention is able to determine that a gesture has occurred and its type. Each identified gesture is equivalent to a predetermined order, in such a way that when the execution of the at least a first gesture and/or the execution of the at least a second gesture is determined, the method executes the order according to the previously stored information.

In a preferred embodiment, a complete and sequential sequence of all possible steps comprises the steps of: performing a predefined first gesture; displaying information from the function menu via the graphical display device of a first interface; issuing a message via the graphical display device of the first interface requesting authorisation; determining an input of information authorising control by subsequent locations; representing through the first interface the at least one function to be controlled; preferably in a simplified way in the first interface; recognising a second gesture; interpreting this second gesture; controlling the parameter of the modified function according to the nature of the gesture; representing through the first interface the changes that occur in the function; and finally, disabling the control of the function.

The object of the present invention also includes a gesture control device for at least one function of a vehicle, configured to execute the method previously described. This gesture control device presents the successive advantages mentioned above for the method of the present invention.

Note that, specifically, the control unit is configured or programmed to execute the method described above. The control unit communicates with the detector, the first interface, and the second interface, preferably via cable communication, through the vehicle's own data bus, which increases the reliability and the speed of data and instruction transmission.

According to another aspect of the invention, the device comprises at least one detector, where the at least one detector is configured to recognise the at least one first gesture and recognise the at least one second gesture. In this way, the occupant of the rear seats can easily transmit their preference to change one or more of the vehicle parameters.

Advantageously, the detector is oriented vertically, in such a way that the detector recognises the at least a first gesture and recognises the at least a second gesture executed on top of said detector. Thus, due to its position and orientation, its detection is fast and reliable.

The attached drawings show, as an example but not limited to, a gesture control method and device for the at least one function of a vehicle, constituted in accordance with the invention. Other characteristics and advantages of this gesture control method and device for the at least one function of a vehicle, which is the object of this invention, will be evident from the description of a preferred, but not exclusive, embodiment, which is illustrated as a non-exclusive example in the attached drawings, in which:

### BRIEF DESCRIPTION OF THE DRAWINGS

- Figure 1: A perspective view of the driver's position in a vehicle, a graphical representation device arranged on the dashboard, in accordance with this invention.
- Figure 2: A schematic view with the elements that make up the device of the present invention.
- Figure 3: A perspective view of one of the rear seats with a console lodged between the seats, in accordance with the present invention.
- Figure 4A: A schematic view of a first control gesture, with an open hand, in accordance with the present invention.
- Figure 4B: A schematic view of a second control gesture, with an open hand moving laterally, and a third access gesture, with a wrist turning downwards, in accordance with the present invention.
- Figure 4C: A schematic view of a fourth control gesture, with a hand moving and closing, in accordance with the present invention.
- Figure 4D: A schematic view of a fifth control gesture, with a closed hand moving, in accordance with the present invention.
- Figure 4E: A schematic view of a sixth control gesture, with a closed hand opening, in accordance with the present invention.
- Figure 4F: A schematic view of a seventh control gesture, with a wrist turning upwards, in accordance with the present invention.

### DESCRIPTION OF A PREFERRED EMBODIMENT

In view of the above-mentioned figures and in accordance with the numbering adopted, an example of the preferred embodiment of the invention can be observed in them, which includes the parts and elements indicated and described in detail below.

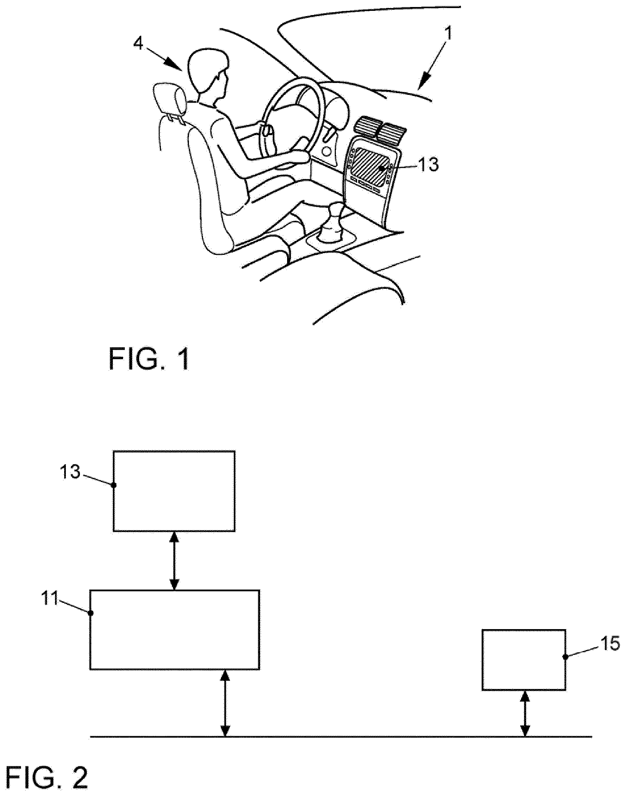

Figure 1 shows, for illustration purposes, a perspective view of the driver's position 4 of a vehicle 1. Vehicle 1 comprises a graphical representation device arranged on the dashboard, performing the functions of the first interface 13, through which the driver 4 communicates with the vehicle 1.

Figure 2 shows, for illustration purposes, a view of a scheme with the integral elements of the device of the present invention, where the existing connection between the control unit 11 and the first interface 13 can be observed. Additionally, the control unit 11 communicates with the detector 15, preferably through physical means, such as a communication bus. The detector 15 is arranged, according to a preferred mode of embodiment, in the central area of the rear seats 12 of the vehicle 1, i.e. between the right rear seat and the left rear seat of the vehicle 1. More specifically, the at least one detector 15 is configured to recognise the at least one first gesture 61 and recognise the at least one second gesture 62.

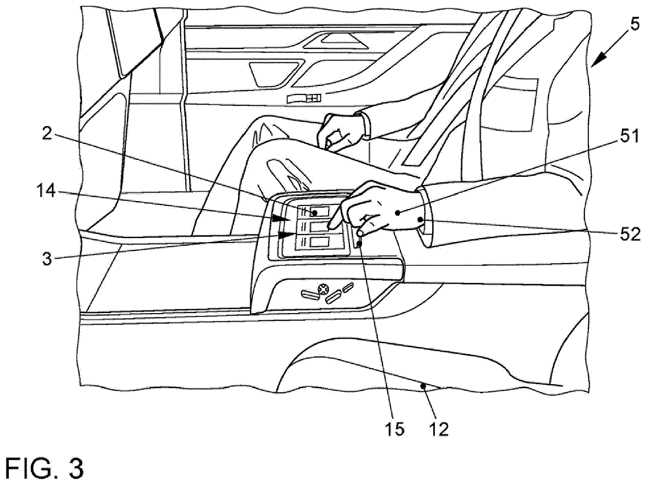

Preferably, the detector 15 is at least an infrared sensor, which is implemented in the rear area of the console, specifically in the axis of symmetry of the vehicle 1, between the right rear seat 12 right and the left rear seat 12. More particularly, as can be seen in Figure 3, the detector 15 is oriented vertically, in such a way that the detector 15 recognises the at least a first gesture 61 and recognises the at least a second gesture 62 executed above the detector 15.

In particular, the infrared is oriented vertically and pointing upwards, in such a way that it can be used by any of the occupants 5 of the rear seats 12. This detector 15 is physically connected to the system and control unit 11, which is faster and more effective than a wireless connection.

The procedure of the present invention executes a series of basic steps, which include, in an illustrative and non-limiting manner, the following:
- a detector 15 or sensor detects a specific gesture 6 or first gesture 61, such as a hand in the shape of a fist, in the vertical line on which the detector 15 points. This first gesture 61 is recognised, in such a way that it detects a willingness on the part of the occupants 5 of the rear seats 12 to control by means of gestures 6 some functions or parameters of the vehicle;
- the control unit 11 receives information that a occupant 5 of rear seats 12 wants to control some variable or parameter of a function of the vehicle 1 by means of gestures 6;
- the control unit 11 sends a query to the driver 4 of the vehicle 1, in particular via the HMI display installed in the dashboard of the vehicle 1 or the first interface 13. Through this first interface 13 the possibility of allowing the occupants 5 of the rear seats 12 to modify the parameters of the vehicle 1 is shown, generating either an accepted or refused access response;
- the control unit 11 receives an acceptance from the driver 4 for the request, in such a way that a control of certain variables for the vehicle 1 is enabled from the rear seats 12;
- the HMI or first interface 13 represents a reduced and simplified menu or context which the occupant 5 of the rear seats 12 can access, being able to modify, by way of example, the following variables or parameters related to rear seats 12: ventilation, ambient lighting, music volume (intensifying or reducing only the loudspeakers of rear seats), the heating in the rear seats, or any other variable or particular parameter for the rear seats 12;
- the detector 15 detects gestures 6, specifically second gestures 62, made by the occupant 6 of the rear seats 12. These gestures 6 allow the modifiable variable or parameters to be changed, from among the various available functions. In addition, their content allows access, and for intensities and/or volumes to be increased or decreased;
- the HMI or first interface 13 represents these changes, simultaneously to the changes or alterations that the occupant 5 executes by means of the at least a second gesture 62.

In this way, both the driver 4 and the occupant 5 of the rear seat 12 see the modifications made on the display of the HMI or the first interface 13. It is noted that the HMI represents reduced content only for the occupant 5 of the rear seats 12, in order for them to have information in response to the steps and instructions they are performing;
- Finally, the control unit 11 disables the control of functions by the occupants 5 of the rear seats 12, so that the same information is represented in the HMI as that which was represented before the control of functions was enabled by the occupants 5 of the rear seats 12.

A second alternative mode of the present invention can be seen in Figure 3. Figure 3 illustrates a perspective view of one of the rear seats 12 with a console between them. Figure 3 shows the interior of the passenger compartment of a vehicle 1, with a second interface 14 between the two rear seats 12, which includes a detector 15 designed to capture the gestures that the occupant occupant 5 of these rear seats 12 makes with their hand 51 or wrist 52, in order to indicate to the control unit 11 their preference to change some variable or parameter of the at least one function 2 of the vehicle 1. This function is visible in the graphical representation device in the first interface 13 in the form of a graphical menu 3, preferably with options and icons.

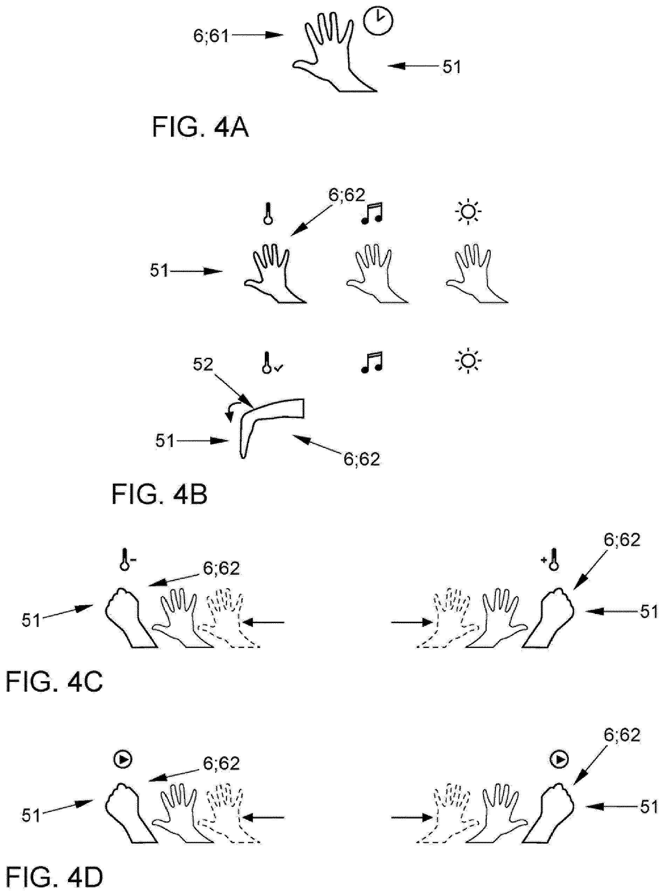

Figure 4A shows an illustrative view of a first activation gesture 61, with a hand 51 open. Thus, the detector 15 transmits a wireless signal, receives the transmitted wireless signal and analyses the variation between the transmitted wireless signal and the received wireless signal. Based on previously stored information, control unit 11 determines whether the gesture 6 performed by the occupant 5 matches the at least one stored first gesture 61. If this is the case, a control of the at least one function 2 of the vehicle 1 is enabled and access to the handling of certain variables and parameters of the vehicle 1 is activated for the occupants 5 of the rear seats 12, preferably by keeping the palm open above the sensor or detector 15, at a given distance, for a given number of seconds, after which the occupant 5 receives information in response from the control unit 11.

Once the first gesture 61 is recognised, the control unit enables the control of the at least one function 2 of the vehicle 1. The enabling of the control may comprise an authorisation by a occupant 5 of a front seat of the vehicle 1, preferably by a driver 4 of the vehicle 1 and preferably by means of the first interface 13, but it may also be carried out by voice control, or by an actuator on the steering wheel of the vehicle 1. If the authorisation is affirmative, the at least one function 2 of the vehicle 1 is controlled.

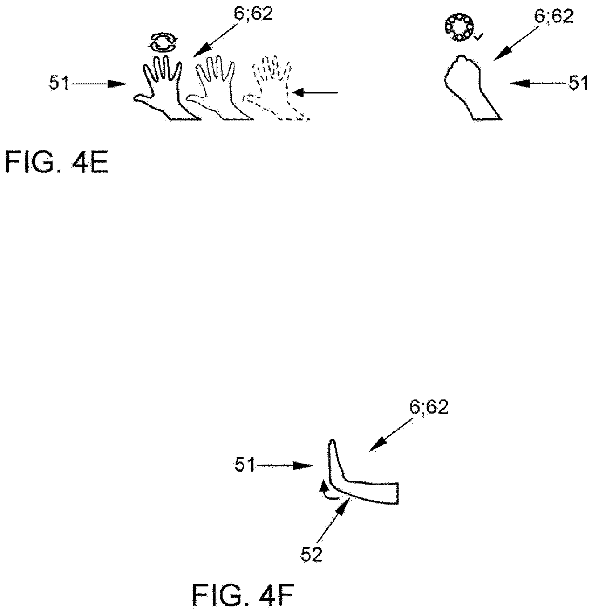

In figures 4B, 4C, 4D, 4E and 4F, a plurality of second gestures 62 are represented in an illustrative and not limiting way. Thus, the detector 15 transmits a wireless signal, receives the transmitted wireless signal and analyses the variation between the transmitted wireless signal and the received wireless signal. Based on previously stored information, control unit 11 determines whether the gesture 6 performed by the occupant 5 matches the at least one stored second gesture 62. According to the second recognised gesture 62, the occupant 5 is able to modify the at least one parameter of the vehicle 1. This parameter of the vehicle 1 is preferably linked to the rear seat 12 of the vehicle 1, thus improving the comfort of the occupant 5 of the rear seat 12. More specifically, the occupant 5 can navigate between the at least one function 2 of the vehicle 1 and/or select the at least one function 2 of the vehicle 1 and/or increase an intensity of the at least one function 2 of the vehicle 1 and/or reduce an intensity of the at least one function 2 of the vehicle 1.

Thus, and for illustrative and non-limited purposes, the first gesture 61 to activate the at least a second interface 14 is a hand 51 in the shape of a fist, the second gesture 62 to select the at least a function 2 of the vehicle 1 from a menu 3 involves moving a hand 51 from left to right or from right to left, the second gesture 62 to enter the at least one function 2 of the vehicle 1 selected from a menu 3 involves turning a wrist 52 upwards and downwards, the second gesture 62 to increase the intensity of the at least one function 2 of vehicle 1 involves moving a hand 51 up and down, and the second gesture 62 to reduce the intensity of the at least one function 2 of the vehicle 1 involves moving a hand 51 up and down.

Figure 4B illustrates a second gesture 62 for navigating between the plurality of functions 2 of the vehicle 1 by moving the open hand 51 sideways, and a third gesture 6 to select the desired function 2 by turning a wrist 52 downwards, which can be considered within the category of the second gesture 62.

By way of illustration, once activated, in the first or second interface 13, 14, three options mentioned above may appear: Air conditioning or heating, music and ambient light. The occupant 5 accesses each of them by moving their hand 51, with the palm open, moving it sideways to select the option of interest. The occupant 5 then rotates their wrist 52 downwards to access the contents of the option just selected.

Figure 4C shows, for illustrative purposes, a view of a fourth control gesture 6, in the category of the so-called second gesture 62, by moving and closing a hand 51.

By way of illustration, once the air conditioning and heating option is selected, the intensity of the air conditioning function 2 is reduced by closing the hand 51 of the occupant 5, from gesture 6 with extended fingers to gesture 6 with closed fingers. On the other hand, the intensity of the air conditioning function 2 is increased when the occupant 5 opens their hand 51, from a gesture 6 with the fingers closed to a gesture 6 with the fingers open.

Figure 4D shows, for illustrative purposes, a view of a fifth gesture 6, in the category of the so-called second gesture 62, for control, moving the closed hand 51.

By way of illustration, with regards to the music function, to select a different song, the occupant 5 can move their hand 51 from side to side in the direction of their preference to navigate between the available songs and select one. To play a song, they can make a gesture 6 by closing their hand 51.

Figure 4E shows, for illustrative purposes, a view of a sixth control gesture 6, in the category of the so-called second gesture 62, by opening the closed hand 51.

By way of illustration, with regards to the ambient light function, in order to activate a palette of colours that can be seen on the graphic representation device or screen, the occupant 5 has to move their hand 51 to the left.

Then, to select the colour they are interested in, they rotate their hand 51 and make a gesture 6 by closing their hand 51 to apply the colour that appears in the graphic representation device.

Figure 4F shows, for illustrative purposes, a view of a seventh control gesture 6, in the category of the so-called second gesture 62, by turning the wrist 52 upwards.

Optionally, and by way of illustration, to return to the gesture control 6 menu 3, the occupant 5 can turn their wrist 52 upwards with an open hand 51. And to cancel the action by gesture control 6, they remove their hand 51, and this activates a process contrary to the activation that will cancel it.

According to a particular mode of embodiment, the detector 15 determines the occupant 5 of the at least one rear seat 12 of the vehicle 1, in such a way that the control unit 11 is able to recognise whether it is a occupant 5 seated in the left rear seat 12 or a occupant 5 seated in the right rear seat 12. In this way, the control unit 11 modifies the parameter of the vehicle 1 that affects the identified rear seat 12, improving the comfort of the occupants 5 in an individualised and effective way. For this purpose, the detector 15 determines the thumb position of the occupant's 5 hand 51. The detector 11 determines the position of the occupant 5 based on the thumb position of the hand 51 compared to the rest of the occupant's 5 hand 51.

In addition, the method comprises an additional step of disabling the control of the at least one function 2 of the vehicle 1, so that the driver 4 can cancel the interaction of the occupants 5 of the rear seats 12 at any time. This action can be performed by tapping the screen of the first interface 13, on an icon to go back in the routine, or to completely cancel and return to the start menu 3. Also, optionally, it can be cancelled by a voice command, or also if the detector detects during a determined period of time that a hand 51 is in front of the first interface 13. Alternatively, disabling occurs after a period of inactivity.

### List of numerical references:

- 1: vehicle
- 11: control unit
- 12: rear seat
- 13: first interface
- 14: second interface
- 15: detector
- 2: function
- 3: menu
- 4: driver
- 5: occupant
- 51: hand
- 52: wrist
- 6: gesture
- 61: first gesture
- 62: second gesture

## Claims

1. Method of controlling through gestures at least one function (2) of a vehicle (1), the method comprising the following steps:
- recognizing at least one first gesture (61) of an occupant (5) of at least one rear seat (12) of the vehicle (1),
- enabling a control of the at least one function (2) of the vehicle (1) based on the at least one recognised first gesture (61),
- recognizing at least one second gesture (62) of the occupant (5) of the at least one rear seat (12) of the vehicle (1),
- controlling the at least one function (2) of the vehicle (1) based on the at least one recognised second gesture (62),
- representing the at least one function (2) of the vehicle (1) by means of a graphical representation device, the at least one graphical representation device being a first interface
(13), **characterised in that** the at least one first interface (13) is arranged on a vehicle instrument panel (1), and representing the at least one function (2) of the vehicle (1) in the first interface (13) comprises representing the at least one function (2) in a simplified way, in such a way that the at least one function (2) is visible from the at least one rear seat (12) of the vehicle (1).

2. Method according to any of the preceding claims, **characterised in that** the step of controlling the at least one function (2) of the vehicle (1) comprises modifying at least one parameter of the vehicle (1), wherein the at least one parameter of the vehicle (1) is linked to the at least one rear seat (12) of the vehicle (1).

3. Method according to Claim 2, **characterised in that** it comprises an additional step of determining the occupant (5) of the at least one rear seat (12) of the vehicle (1) performing the at least one second gesture (62), wherein the step of modifying the at least one vehicle parameter (1) comprises modifying the at least one vehicle parameter (1) linked to the occupant (5) of the at least one rear seat (12) of the given vehicle (1).

4. Method according to any of the preceding claims, **characterised in that** the step of controlling the at least one function (2) of the vehicle (1) comprises navigating between the at least one function (2) of the vehicle (1) and/or selecting the at least one function (2) of the vehicle (1) and/or increasing an intensity of the at least one function (2) of the vehicle (1) and/or reducing an intensity of the at least one function (2) of the vehicle (1).

5. Method according to any of the preceding claims, **characterised in that** it comprises an additional step of determining an authorisation to enable the control of the at least one (2) function of the vehicle (1).

6. Method according to Claim 5, **characterised in that** the authorisation to enable the control of the at least one function (2) is performed by an occupant (5) of at least one front seat of the vehicle (1).

7. Method according to Claim 5, **characterised in that** it comprises an additional step of disabling the control of the at least one (2) function of the vehicle (1).

8. Method according to any of the preceding claims, **characterised in that** the step of recognising the at least one first gesture (61) and/or the step of recognising the at least one second gesture (62) comprises the steps of:
- transmitting a wireless signal,
- receiving the transmitted wireless signal,
- analysing a variation between the transmitted wireless signal and the received wireless signal,
- identifying the at least a first gesture (61) and/or the at least a second gesture (62) based on the variation between the transmitted wireless signal, the received wireless signal and previously stored information.

9. Gesture control device for at least one function (2) of a vehicle (1), configured to execute the method of Claim 1, **characterised in that** the gesture control device comprises
• at least one detector (15), wherein the at least one detector (15) is configured to recognise at least one first gesture (61) of an occupant (5) of at least one rear seat (12) of the vehicle (1), and to recognise at least one second gesture (62) of the occupant (5) from the at least one rear seat (12) of the vehicle (1);
• a control unit configured to enable a control of at least one function (2) of the vehicle (1) based on the at least one recognised first gesture (61), and to control the at least one function (2) of the vehicle (1) based on the at least one recognised second gesture (62);
• a graphic representation device configured to represent the at least one function (2) of the vehicle (1), and represent the at least one function (2) of the vehicle (1) on a first interface (13), wherein the first interface (13) is arranged on a vehicle instrument panel (1), comprising representing the at least one function (2) in a simplified manner, wherein the at least one function (2) is visible from the at least one rear seat (12) of the vehicle (1).

10. Device according to Claim 9, **characterised in that** it comprises at least one detector (15), wherein the at least one detector (15) is configured to recognise the at least one first gesture (61) and recognise the at least one second gesture (62).

11. Device according to any of the Claims 9 or 10, **characterised in that** the detector (15) is oriented vertically, in such a way that the detector (15) is adapted to recognise the at least one first gesture (61) and the at least one second gesture (62) when executed above the detector (15).

## Patentansprüche

1. Methode zum Steuern mindestens einer Funktion (2) eines Fahrzeugs (1) mithilfe von Gesten, wobei die Methode die folgende Schritte umfasst:
- Erkennen mindestens einer ersten Geste (61) eines Passagiers (5) auf mindestens einem Rücksitz (12) des Fahrzeugs (1),
- Ermöglichen des Steuerns der mindestens einen Funktion (2) des Fahrzeugs (1) beruhend auf der mindestens einen erkannten ersten Geste (61),
- Erkennen mindestens einer zweiten Geste (62) des Passagiers (5) auf mindestens einem Rücksitz (12) des Fahrzeugs (1),
- Steuern der mindestens einen Funktion (2) des Fahrzeugs (1) beruhend auf der mindestens einen erkannten zweiten Geste (62),
- Darstellen der mindestens einen Funktion (2) des Fahrzeugs (1) auf einem grafischen Anzeigegerät, wobei es sich bei der mindestens einen grafischen Anzeigegerät um eine erste Oberfläche (13) handelt,
und die sich dadurch auszeichnet, dass die mindestens eine erste Schnittstelle (13) an einer Instrumententafel des Fahrzeugs (1) angebracht ist, und dass die Darstellung der mindestens einen Funktion (2) des Fahrzeugs (1) auf der ersten Oberfläche (13) eine vereinfachte Darstellung der mindestens einen Funktion (2) umfasst, sodass die mindestens eine Funktion (2) vom mindestens einen Rücksitz (12) des Fahrzeugs (1) aus sichtbar ist.

2. Methode gemäß einem der vorherigen Ansprüche, die sich dadurch auszeichnet, dass der Schritt des Steuerns der mindestens einen Funktion (2) des Fahrzeugs (1) das Verändern mindestens eines Parameters des Fahrzeugs (1) umfasst,
wobei der mindestens eine Parameter des Fahrzeugs (1) dem mindestens einen Rücksitz (12) des Fahrzeugs (1) zugeordnet ist.

3. Methode gemäß Anspruch 2, die sich dadurch auszeichnet, dass sie den zusätzlichen Schritt des Ermittelns des Passagiers (5) auf dem mindestens einen Rücksitz (12) des Fahrzeugs (1) umfasst, der die mindestens eine zweite Geste (62) ausführt,
wobei der Schritt des Änderns des mindestens einen Fahrzeugparameters (1) das Ändern des mindestens einen Fahrzeugparameters (1) umfasst, der dem Passagier (5) auf dem mindestens einen Rücksitz (12) des Fahrzeugs (1) zugeordnet ist.

4. Methode gemäß einem der vorherigen Ansprüche, die sich dadurch auszeichnet, dass der Schritt des Steuerns der mindestens einen Funktion (2) des Fahrzeugs (1) das Navigieren zwischen der mindestens einen Funktion (2) des Fahrzeugs (1) und/oder das Auswählen der mindestens einen Funktion (2) des Fahrzeugs (1) und/oder das Erhöhen der Intensität der mindestens einen Funktion (2) des Fahrzeugs (1) und/oder das Reduzieren der Intensität der mindestens einen Funktion (2) des Fahrzeugs (1) umfasst.

5. Methode gemäß einem der vorherigen Ansprüche, die sich dadurch auszeichnet, dass sie den zusätzlichen Schritt des Ermittelns einer Berechtigung für das Steuern der mindestens einen Funktion (2) des Fahrzeugs (1) umfasst.

6. Methode gemäß Anspruch 5, die sich dadurch auszeichnet, dass sie Berechtigung zur Freigabe des Steuerns der mindestens einen Funktion (2) durch einen Passagier (5) auf mindestens einem Vordersitz des Fahrzeugs (1) erfolgt.

7. Methode gemäß Anspruch 5, die sich dadurch auszeichnet, dass sie den zusätzlichen Schritt des Deaktivierens der Steuerung der mindestens einen Funktion (2) des Fahrzeugs (1) umfasst.

8. Methode gemäß einem der vorherigen Ansprüche, die sich dadurch auszeichnet, dass der Schritt des Erkennens der mindestens einen ersten Geste (61) und/oder der Schritt des Erkennens der mindestens einen zweiten Geste (62) folgende Schritte umfasst:
- Übertragen eines drahtlosen Signals,
- Abrufen des übertragenen drahtlosen Signals,
- Analysieren einer Abweichung zwischen dem gesendeten drahtlosen Signal und dem abgerufenen Signal,
- Ermitteln der mindestens einen ersten Geste (61) und/oder der mindestens einen zweiten Geste (62) anhand der Abweichung zwischen dem übertragenen drahtlosen Signal, dem abgerufenen drahtlosen Signal und den zuvor gespeicherten Daten.

9. Gestensteuerungsgerät für mindestens eine Funktion (2) eines Fahrzeugs (1), das die Methode gemäß Anspruch 1 durchführt, das sich dadurch auszeichnet, dass das Gestensteuerungsgerät Folgendes umfasst:
• mindestens einen Detektor (15),
wobei der mindestens eine Detektor (15) mindestens eine erste Geste (61) eines Passagiers (5) auf mindestens einem Rücksitz (12) des Fahrzeugs (1) sowie mindestens eine zweite Geste (62) des Passagiers (5) auf dem mindestens einen Rücksitz (12) des Fahrzeugs (1) erkennt;
• eine Steuerungseinheit, die das Steuern mindestens einer Funktion (2) des Fahrzeugs (1) anhand der mindestens einen erkannten ersten Geste (61) ermöglicht, und die mindestens eine Funktion (2) des Fahrzeugs (1) anhand der mindestens einen erkannten zweiten Geste (62) steuert;
• ein grafisches Anzeigegerät, das die mindestens eine Funktion (2) des Fahrzeugs (1) darstellt, und die mindestens eine Funktion (2) des Fahrzeugs (1) auf einer ersten Oberfläche (13) darstellt, wobei sich die erste Oberfläche (13) auf einer Instrumententafel (1) des Fahrzeugs befindet und die mindestens eine Funktion (2) auf vereinfachte Weise darstellt, wobei die mindestens eine Funktion (2) vom mindestens einen Rücksitz (12) des Fahrzeugs (1) aus sichtbar ist.

10. Gerät gemäß Anspruch 9,
das sich dadurch auszeichnet, dass es mindestens einen Detektor (15) umfasst,
wobei der mindestens eine Detektor (15) die mindestens eine erste Geste (61) und die mindestens eine zweite Geste (62) erkennt.

11. Das Gerät gemäß einem der Ansprüche 9 oder 10, das sich dadurch auszeichnet, dass der Detektor (15) vertikal ausgerichtet ist, sodass der Detektor (15) die mindestens eine erste Geste (61) und die mindestens eine zweite Geste (62) erkennt, wenn diese über dem Detektor (15) ausgeführt werden.

## Revendications

1. Procédé de commande par le biais de gestes d'au moins une fonction (2) d'un véhicule (1), ledit procédé comprenant les étapes suivantes :
- la reconnaissance d'au moins un premier geste (61) d'un occupant (5) d'au moins un siège arrière (12) du véhicule (1),
- l'activation d'une commande de l'au moins une fonction (2) du véhicule (1) en fonction de l'au moins un premier geste (61) reconnu,
- la reconnaissance d'au moins un second geste (62) de l'occupant (5) de l'au moins un siège arrière (12) du véhicule (1),
- la commande de l'au moins une fonction (2) du véhicule (1) en fonction de l'au moins un second geste (62) reconnu,
- la représentation de l'au moins une fonction (2) du véhicule (1) au moyen d'un dispositif de représentation graphique, l'au moins un dispositif de représentation graphique étant une première interface (13),
**caractérisé en ce que**
l'au moins une première interface (13) est disposée sur un tableau de bord du véhicule (1), et la représentation de l'au moins une fonction (2) du véhicule (1) dans la première interface (13) comprend la représentation de l'au moins une fonction (2) de manière simplifiée de telle sorte que l'au moins une fonction (2) est visible depuis l'au moins un siège arrière (12) du véhicule (1).

2. Procédé selon l'une quelconque des revendications précédentes, **caractérisé en ce que** l'étape de commande de l'au moins une fonction (2) du véhicule (1) comprend la modification d'au moins un paramètre du véhicule (1), dans lequel
l'au moins un paramètre du véhicule (1) est lié à l'au moins un siège arrière (12) du véhicule (1).

3. Procédé selon la revendication 2, **caractérisé en ce qu'**il comprend une étape supplémentaire consistant à déterminer l'occupant (5) de l'au moins un siège arrière (12) du véhicule (1) effectuant l'au moins un second geste (62), dans lequel
l'étape de modification de l'au moins un paramètre de véhicule (1) comprend la modification de l'au moins un paramètre de véhicule (1) lié à l'occupant (5) de l'au moins un siège arrière (12) du véhicule donné (1) .

4. Procédé selon l'une quelconque des revendications précédentes, **caractérisé en ce que** l'étape de commande de l'au moins une fonction (2) du véhicule (1) comprend la navigation entre l'au moins une fonction (2) du véhicule (1) et/ou la sélection de l'au moins une fonction (2) du véhicule (1) et/ou l'augmentation de l'intensité de l'au moins une fonction (2) du véhicule (1) et/ou la réduction d'une intensité de l'au moins une fonction (2) du véhicule (1).

5. Procédé selon l'une quelconque des revendications précédentes, **caractérisé en ce qu'**il comprend une étape supplémentaire consistant à déterminer une autorisation pour permettre la commande de l'au moins une fonction (2) du véhicule (1).

6. Procédé selon la revendication 5, **caractérisé en ce que** l'autorisation pour permettre la commande de l'au moins une fonction (2) est effectuée par un occupant (5) d'au moins un siège avant du véhicule (1).

7. Procédé selon la revendication 5, **caractérisé en ce qu'**il comprend une étape supplémentaire consistant à désactiver la commande de l'au moins une fonction (2) du véhicule (1).

8. Procédé selon l'une quelconque des revendications précédentes, **caractérisé en ce que** l'étape de reconnaissance de l'au moins un premier geste (61) et/ou l'étape de reconnaissance de l'au moins un second geste (62) comprend les étapes suivantes :
- l'émission d'un signal sans fil,
- la réception du signal sans fil émis,
- l'analyse d'une variation entre le signal sans fil émis et le signal sans fil reçu,
- l'identification de l'au moins un premier geste (61) et/ou de l'au moins un second geste (62) en fonction de la variation entre le signal sans fil émis, le signal sans fil reçu et les informations précédemment mémorisées.

9. Dispositif de commande gestuelle pour au moins une fonction (2) d'un véhicule (1), conçu pour mettre en œuvre le procédé selon la revendication 1, **caractérisé en ce que** le dispositif de commande gestuelle comprend
• au moins un détecteur (15), dans lequel l'au moins un détecteur (15) est conçu pour reconnaître au moins un premier geste (61) d'un occupant (5) d'au moins un siège arrière (12) du véhicule (1), et reconnaître au moins un second geste (62) de l'occupant (5) depuis l'au moins un siège arrière (12) du véhicule (1);
• une unité de commande conçue pour permettre une commande d'au moins une fonction (2) du véhicule (1) en fonction de l'au moins un premier geste (61) reconnu, et pour commander l'au moins une fonction (2) du véhicule (1) en fonction de l'au moins un second geste (62) reconnu;
• un dispositif de représentation graphique conçu pour représenter l'au moins une fonction (2) du véhicule (1), et la représentation de l'au moins une fonction (2) du véhicule (1) sur une première interface (13), dans lequel la première interface (13) est disposée sur un tableau de bord du véhicule (1), comprenant la représentation de l'au moins une fonction (2) d'une manière simplifiée, dans lequel l'au moins une fonction (2) est visible depuis l'au moins un siège arrière (12) du véhicule (1).

10. Dispositif selon la revendication 9,
**caractérisé en ce qu'**il comprend au moins un détecteur (15), dans lequel l'au moins un détecteur (15) est conçu pour reconnaître l'au moins un premier geste (61) et pour reconnaître l'au moins un second geste (62).

11. Dispositif selon l'une quelconque des revendications 9 ou 10,
**caractérisé en ce que** le détecteur (15) est orienté verticalement de telle sorte que le détecteur (15) est conçu pour reconnaître l'au moins un premier geste (61) et l'au moins un second geste (62) lorsqu'il est effectué au-dessus du détecteur (15).
